# EUROPEAN PATENT APPLICATION

(11) **EP 4 667 234 A1**
(43) Date of publication of application: **24.12.2025**
(21) Application number: 24756094.9
(22) Date of filing: 05.02.2024
(51) Int. Cl.: B60B 21/00

(54) **FLEXIBLE WHEEL RIM AND HUB**

(30) Priority: 17.02.2023 CN 202310128535
(71) Applicant: Wei, Xiangpo, Beijing 101101 (CN)
(72) Inventor: Wei, Xiangpo, Beijing 101101 (CN)
(74) Representative: RGTH
(86) International application number: PCT/CN2024/075932
(87) International publication number: WO 2024/169720

(57) **Abstract**

Disclosed is a wheel rim with flexible rim flanges, and under the premise of meeting a GB/T 3487 dimension standard, the wheel rim (10) with the flexible rim flanges divides rim flanges into at least two parts, wherein one part is a flexible rim flange (20) located at an outermost circumference of the rim flange, and the other part is a half-height rim flange (17) located at an inner side of a circumference of the flexible rim flange; maximum diameters of inner and outer rim flanges of the wheel rim (10) with the flexible rim flanges are the same or in a tolerance range; and the flexible rim flange (20) mainly includes an elastomer material and a reinforced framework. A hardness of the elastomer material is less than 30% of a hardness of the half-height rim flange, but the elastomer material is very tough.

## Description

### TECHNICAL FIELD

The present invention relates to a wheel rim with flexible rim flanges, which is used with a pneumatic tire, and belongs to the technical field of wheel rims.

### BACKGROUND OF THE PRESENT INVENTION

Because most of existing wheel rim and rim flange materials are relatively rigid materials (such as aluminum alloy and magnesium alloy wheel rims, a high-strength plastic wheel rim and a steel wheel rim) and not easy to be deformed, when a pneumatic tire encounters a pit, a speed bump, a curbstone and other bumps (an object left on a road surface, etc.) during vehicle driving, the tire will be deformed when a wheel is impacted, and tire rubber will be squeezed onto a rim flange. 1. The tire is easy to be cracked in a sidewall (sometimes accompanied by air leakage), bulged (the tire is easy to be blown out during continuous driving after the tire is bulged, and personal and property safety will be seriously endangered once the tire is blown out), and directly blown out in severe cases, resulting in tire scrapping and traffic accidents, thereby threatening the driving safety; and when the tire is seriously damaged, the vehicle will be unable to run continuously, which will delay a trip. 2. When the wheel is subjected to a large impact, not only the tire will be damaged, but also a rim flange of a conventional wheel rim will be damaged (such as obvious deformation, surface depression and cracking caused by the impact on the rim flange); and electric vehicles are generally heavier than fuel vehicles, so that tires and rim flanges of the electric vehicles are more likely to be damaged under an impact. Users complain seriously for the above cases 1 and 2. Especially for a tire with a small flatness ratio, such phenomenon is more serious. 3. An inner rim flange of the wheel rim (the inner rim flange refers to a rim flange that cannot be directly observed from a periphery of a vehicle, while a rim flange that can be observed is an outer rim flange) is cracked, and such phenomenon mostly occurs in a wheel rim matched with the tire with the small flatness ratio and a wheel rim matched with a run stability control tire. At present, a wheel rim diameter is getting bigger and the tire is getting thinner (that is, the flatness ratio of the tire is getting smaller) in the market, so that tests on the tire and the wheel rim will become more severe.

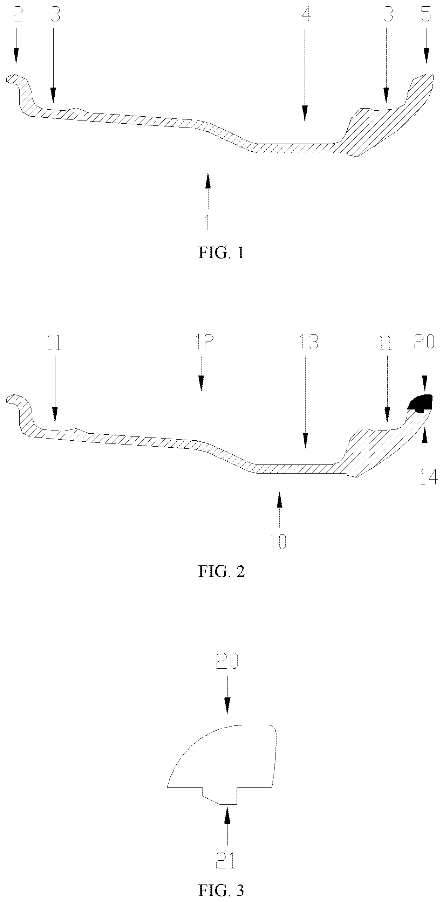

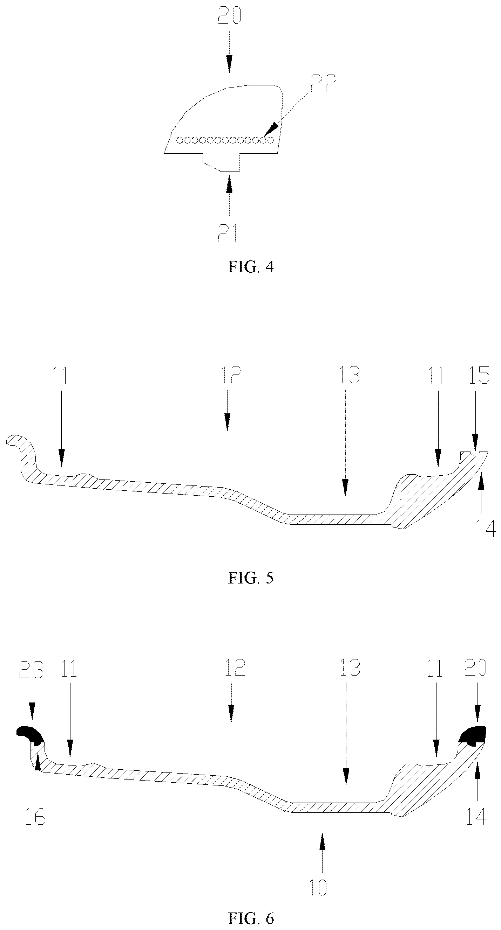

In the existing document CN201780041971.2, two flexible members are assembled and fixed on a bead seat of a wheel rim, the flexible members outwardly extend over a rim flange of the wheel rim to the outside of the rim flange along a wheel axis, and a tire is mounted on the bead seat (253) of the flexible members instead of being directly mounted on the wheel rim, referring to FIG. 4; and under the protection of a wheel rim cover (1) (referring to FIG. 1), these components jointly form a wheel assembly. However, the complicated assembly is different from existing tire disassembly and assembly, requires training, and has a high promotion cost in the retail market and a high material cost. A dimension of a wheel rim assembly (the wheel assembly excluding the tire) in this document does not meet a GB/T 3487 dimension standard, there is a very large difference in appearance from a wheel with a wheel rim meeting the GB/T 3487 dimension standard, and vehicle companies and consumers cannot readily accept this wheel. It can be seen from the existing document CN201780041971.2 that, in this wheel, a large-diameter tire is mounted on a small-diameter rim base through the flexible members. For example, a 21-inch tire is mounted on a 20-inch wheel rim. In the case of the same wheel outer diameter and the same wheel rim, such as a wheel with the 21-inch tire + the flexible members + the wheel rim cover + the 20-inch wheel rim (aluminum alloy casting) in CN201780041971.2 and a wheel with the 20-inch tire + the 20-inch wheel rim (aluminum alloy casting), according to tire impact comparison, the two wheels have the same distance from a tire tread to a rim flange of a wheel rim, and there is no significant difference in an impact force on the rim flange of the wheel rim. There is a certain risk of mounting the tire on the bead seat (253) of the flexible members. The flexible members wholly bear loads (a radial load and an axial load) of the tire, and compared with a metal or high-strength plastic material, a material of the flexible members is more prone to aging, and the tire may fall off, thereby causing traffic accidents. The material of the flexible members has a lower reliability than the metal material of the rim base. Once the flexible members have a hidden damage or a small crack, it is difficult to found the hidden damage or the small crack at the first time, and the hidden damage or the small crack is easy to be torn under a stress (once there is the small crack, the small crack is easy to be torn into a big notch during normal driving), leading to falling off of the tire, thereby causing traffic accidents. However, existing wheel rim materials can still fix the tire well without leading to falling off of the tire even if there is the crack.

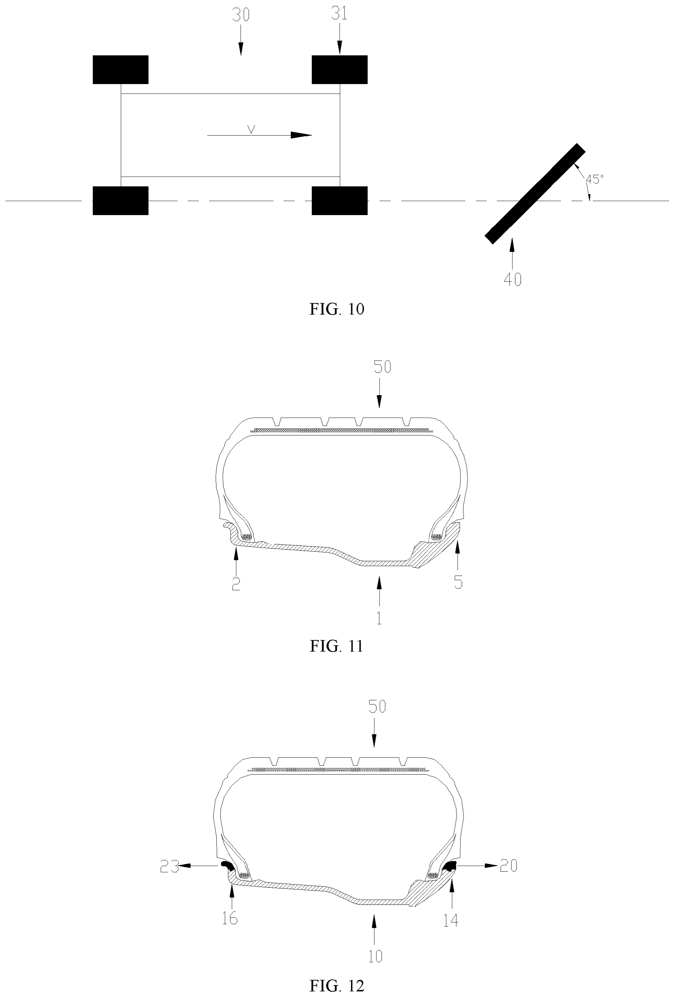

A rim base of a wheel rim with flexible rim flanges in the present invention conforms to the GB/T 3487 dimension standard and is convenient to popularize. The wheel rim with the flexible rim flanges divides rim flanges into at least two parts, wherein one part is a flexible rim flange located at an outermost circumference of the rim flanges, and the other part is a half-height rim flange located at an inner side of a circumference of the flexible rim flange; the flexible rim flange is mainly made of an elastomer material, and a material hardness is less than 30% of a material hardness of the half-height rim flange, but the elastomer material is very tough; when a wheel is impacted (by a pit or a curbstone), the flexible rim flange can be deformed to lower an impact force by buffering (and can be reinstated after the external force disappears), thereby preventing a tire and a wheel rim from being damaged; under an influence of a shape of the wheel rim, most rim flanges of the wheel rim are radially enlarged from top to bottom, and the outermost circumference forms a tip (especially for an outer rim flange, the tire is more easily damaged at the outer rim flange), referring to the outer rim flange 5 in FIG. 1, the tip is replaced by an elastic material, referring to the outer flexible rim flange 20 and the outer half-height rim flange 14 in FIG. 2, when the wheel is impacted, such as an impact of a 45° beam, referring to FIG. 10, the outer rim flange 5 in FIG. 1 will impact the 45° beam with its tip, and the outer rim flange 5 is made of a high rigid material or a non-flexible material, which has no buffering ability or a weak buffering ability, so that the tire is very easy to be damaged, and the rim flange is also easy to be deformed under the impact; and under the impact of the 45° beam, the flexible rim flange 20 at the outer side in FIG. 2 impacts the 45° beam with its tip (FIG. 10), the flexible rim flange 20 is flexible in material, and after the flexible rim flange is deformed after being stressed, the tip is deformed under the stress, and a sharp point of the tip will become blunt, thereby better protecting the tire and the rim flange. For example: 1. if a tip of a sharp knife made of a hard material is replaced by a flexible and elastic material with a very low hardness (such as rubber), the tip will be deformed under the stress and become very blunt, so that it is not easy to pierce other objects by the tip, and the tip itself is not easy to be damaged; and 2. even if the sharp knife made of the hard material is wrapped with a layer of flexible material (such as rubber) outside, when the tip is used to stab other objects, it is still easy to pierce other objects by the tip, and the tip is also easy to be damaged (similar to a flexible decorative strip for the rim flange of the wheel rim in the market, which has no protective ability to the tire and the rim flange; and in the case of a high rigid decorative strip for the rim flange of the wheel rim, such as nylon, when the tire passes through a pit or a boss, the tire is more likely to be bulged or blown out); and it can be seen from comparison that the former can better protect other objects and ourselves from being damaged, while the latter has almost no protection ability. An average material density of the flexible rim flange is about half of a material density of half-height rim flange, and a weight of the wheel rim itself can be reduced, which can achieve the purpose of energy saving and emission reduction. At the same time, the wheel rim with the flexible rim flanges in the present invention conforms to the GB/T 3487 dimension standard, and the flexible wheel rim may be assembled in a factory, without affecting normal disassembly and assembly of the tire in the retail market. The flexible rim flange may be in a different color to be matched with the half-height rim flange, so as to make the appearance more beautiful. Once a surface of the flexible rim flange is injured or damaged, the flexible rim flange may also be easily replaced, without replacing the wheel rim, thereby saving costs for users. The tire of the present invention is fixed on the bead seat made of a high rigid metal (such as aluminum alloy) or a high strength nonmetallic material (such as a carbon fiber), which has low risk of aging and a good reliability as the material of existing rim bases. Moreover, the half-height rim flange mainly bears a force of the tire, which reduces a stress on the flexible rim flange, so that the reliability is much higher than that of the technology in the existing document CN201780041971.2.

### SUMMARY OF THE PRESENT INVENTION

The present invention adopts the following technical solution to solve the technical problems: a wheel rim with a flexible rim flange is provided, wherein the rim flange of the wheel rim with the flexible rim flanges includes at least two parts: a flexible rim flange located at an outermost circumference of the rim flanges, and a half-height rim flange located at an inner side of the flexible rim flange ;
the flexible rim flange includes at least one material, and a hardness of the flexible rim flange is smaller than a hardness of the half-height rim flange ;
the half-height rim flange and a rim base are integrally formed, and in a radial direction, a minimum distance from a circle with a maximum diameter of the half-height rim flange to a circle with a calibration diameter D of the rim base is less than or equal to (a height G of the rim flange -2.5) mm, and the calibration diameter D of the rim base and the height G of the rim flange refer to definitions and numerical standards in GB/T 3487; and
a pneumatic tire can be mounted on a bead seat of the rim base with the half-height rim flange , wherein the rim base integrally formed with the half-height rim flange is the rim base with the half-height rim flange .

Optionally, maximum diameters of inner and outer rim flanges , of the wheel rim with the flexible rim flange are the same or in a tolerance range, and a dimension of the rim base of the wheel rim with the flexible rim flange meets the GB/T 3487 dimension standard.

Optionally, a hardness of the at least one material of the flexible rim flange is less than 30% of a hardness of a material of the half-height rim flange .

Optionally, the half-height rim flange is provided with a groove structure , the flexible rim flange is provided with a convex structure , and the convex structure is mounted in the groove structure ; or, the half-height rim flange is provided with a convex structure , the flexible rim flange is provided with a groove structure , and the convex structure is mounted in the groove structure .

Optionally, the flexible rim flange is provided with a vertical edge structure , and the vertical edge structure of the flexible rim flange can be located between the tire and the corresponding half-height rim flange .

Optionally, the tire can be mounted on the wheel rim and inflated at an air pressure of 2.3 bar, in the case that a wheel has no load, an outer diameter of the half-height rim flange is not less than an outer diameter of a bead steel wire, and in terms of a stress on the rim flange, a contact surface between the half-height rim flange and the tire mainly bears a tire pressure.

Optionally, the flexible rim flange contains at least an elastic material.

Optionally, a friction coefficient between the flexible rim flange or the vertical edge structure of the flexible rim flange and tire rubber is more than twice of a friction coefficient between the half-height rim flange and tire rubber.

Optionally, the elastic material is an elastomer, and the elastomer is a thermoplastic elastomer or a thermosetting elastomer.

Optionally, the flexible rim flange includes an elastomer and an annular framework for preventing stretching, and a tensile resistance of the annular framework is more than twice of a tensile resistance of the elastomer.

The rim base with the half-height rim flange is made of the same material as existing rim bases in the market, which is mostly aluminum alloy; and at least one of the inner and outer rim flanges of the flexible wheel rim includes the half-height rim flange and the flexible rim flange.

The commonly used annular framework is one of a metal wire, a nonmetallic wire and a cloth-based reinforced fabric.

The maximum diameters of inner and outer rim flanges , of the wheel rim with the flexible rim flange are the same or in a tolerance range, which is obviously different from the situation that one diameter of the rim flange of the wheel rim is large and the other diameter of the rim flange is small as described in some documents. 1. One diameter of the rim flange of the wheel rim is large and the diameter of the rim flange is small, which does not meet the GB/T 3487 dimension standard, thereby being not convenient for popularization. 2. When the wheel passes through a pit or a bump, there is a case that, in a wheel rim in which the maximum diameters of the inner and outer rim flanges are the same, two rim flanges of the wheel rim are subjected to the same or similar impact force and may jointly bear the impact force, thereby protecting the tire and the rim flange from being damaged; and when the wheel passes through a pit or a bump, in a wheel rim with one large rim flange diameter and one small rim flange diameter, the large-diameter rim flange may be subjected to a greater impact force, and the large-diameter rim flange and its corresponding tire side surface are more easily damaged. 3. In some literatures, in order to make an outer diameter of the wheel rim larger, and make a diameter of the outer rim flange larger than a diameter of the inner rim flange, the tire can only be mounted over one side of the inner rim flange, which is easy to damage a surface of the wheel rim on the outer rim flange side during tire disassembly and assembly; and at the same time, the tire and the rim flange are more easily damaged under an impact of a 45° beam (FIG. 10).

The distance from the maximum diameter of the half-height rim flange to the calibration diameter D of the rim base is less than or equal to (a height G of the rim flange -2.5 mm), the flexible rim flange is made of the elastic material, and compared with most conventional wheel rims meeting the GB/T 3487 in the market, when the wheel is impacted while passing through a bump or a pit, an impact force on the half-height rim flange is less than an impact force on a rim flange of the conventional wheel rim, thereby protecting the tire and the rim flange from being damaged.

The flexible rim flange may be bent and deformed, and then may be easily assembled over the half-height rim flange .

A wear resistance of the flexible rim flange is not lower than a wear resistance of the tire rubber.

A hardness of at least one material of the flexible rim flange is less than 30% of a hardness of a material of the half-height rim flange , and when the wheel is impacted, a material with a smaller hardness may be well deformed to buffer the force, thereby protecting the tire and the rim flange from being damaged.

The hardness of at least one material of the flexible rim flange is not greater than 80 Shore A hardness.

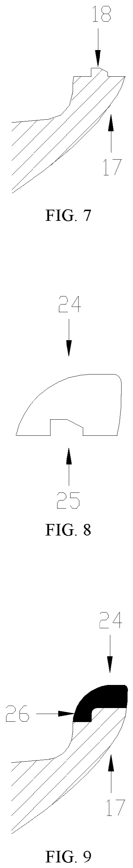

With reference to FIG. 9, the vertical edge structure (26) of the flexible rim flange is located between the tire and the corresponding half-height rim flange (17), and after the tire is inflated: a. the vertical edge structure (26) of the flexible rim flange can prevent the flexible rim flange (24) from falling off through extrusion of the tire and the half-height rim flange (17), and the flexible rim flange may be a single elastomer material or an elastomer reinforced by the annular framework (22); and b. the friction between the flexible rim flange or the vertical edge structure of the flexible rim flange and the tire rubber is large, which can prevent or reduce relative sliding of the tire relative to the wheel rim in a circumferential direction, thereby ensuring the driving safety especially in sudden braking and acceleration, and ensuring that a dynamic balance of the wheel is not damaged at the same time.

The friction between the flexible rim flange and the half-height rim flange can be increased by: 1. increasing a surface roughness, so that the friction coefficient of the contact surface between the flexible rim flange and the half-height rim flange is greater than the friction coefficient of the contact surface between the tire and the rim flange; 2. using an anti-rotation structure, so that the difficulty of relative rotation between the flexible rim flange and the half-height rim flange is increased; and 3. bonding by an adhesive.

With reference to FIG. 2 and FIG. 6, after the tire is inflated, in terms of a stress on the rim flange, the outer diameter of the half-height rim flange is not less than the outer diameter of the bead steel wire (in the case of no steel wire, it refers to a bead reinforcement framework, such as bead Kevlar and other metal wire bundles), the contact surface between the half-height rim flange and the tire rubber mainly bears the pressure of the tire, and the outer diameter of the half-height rim flange is greater than the outer diameter of the bead steel wire; and it can be ensured that the inflated tire will not fall off from the bead seat of the wheel rim, leading to safety accidents.

With reference to FIG. 4, the flexible rim flange at the outer side (or the flexible rim flange at the inner side) is molded by the elastomer (which refers to a part of the flexible rim flange at the outer side (20) excluding the annular framework (22) together with the annular framework (22) for preventing stretching, and the tensile resistance of the annular framework (22) is more than twice of the tensile resistance of the elastomer; and with reference to FIG. 5 and FIG. 6, the annular framework (22) can ensure that the flexible rim flange at the outer side (20) is not excessively stretched and deformed, so that it is ensured that the convex structure of the flexible rim flange at the outer side will not fall off from the groove structure of the outer half-height rim flange during vehicle driving. The annular framework (22) may be the wire bundle or the cloth-based reinforced material.

Excluding a height of the convex structure (21) of the flexible rim flange and the vertical edge structure 26 of the flexible rim flange, a radial height of the flexible rim flange is not less than 2.5 mm (if the height is too small, a buffering performance is poor), and a height of the half-height rim flange in a diameter direction is not less than 4 mm (to prevent the tire from falling off from the bead seat).

During vehicle driving, when the wheel of the pneumatic tire is impacted, objectives of the present invention are as follows (on the premise of not affecting normal disassembly and assembly of the tire): 1. the probability of bulging, cracking and blowing out of the tire under the impact is avoided or reduced to protect the safety of the tire; 2. the probability of irreversible deformation and rim flange cracking under the impact on the rim flange of the wheel rim is avoided or reduced to protect the safety of the rim flange of the wheel rim; 3. the rim flanges includes at least two parts, and may be matched with materials and colors to beautify the wheel rim; 4. the friction between the flexible rim flange or its vertical edge structure and the tire rubber is large, which can prevent or reduce relative sliding of the tire relative to the wheel rim in a circumferential direction, thereby ensuring the driving safety especially in sudden braking and acceleration, and ensuring that a dynamic balance of the wheel is not damaged at the same time; and 5. the flexible rim flange has a detachable structure, so that a damage replacement cost is low; and the flexible rim flange may also be higher than an outer side surface of the wheel, which avoids or reduces the probability of scratching the hard half-height rim flange.

### DESCRIPTION OF THE DRAWINGS

FIG. 1 is a schematic cross-sectional view of a rim base of a conventional integrated wheel rim;
FIG. 2 is a schematic cross-sectional view of a rim base with a half-height rim flange of a wheel rim with flexible rim flanges;
FIG. 3 is a schematic cross-sectional view of the flexible rim flange;
FIG. 4 is another schematic cross-sectional view of the flexible rim flange;
FIG. 5 is a schematic cross-sectional view of a rim base of the wheel rim with the flexible rim flanges;
FIG. 6 is another schematic cross-sectional view of the rim base of the wheel rim with the flexible rim flanges;
FIG. 7 is a schematic cross-sectional view of a half-height rim flange;
FIG. 8 is another schematic cross-sectional view of the flexible rim flange;
FIG. 9 is a schematic cross-sectional view of a rim flange position of the rim base of the wheel rim with the flexible rim flanges;
FIG. 10 is a schematic diagram of tires of a running vehicle impacting a 45° beam;
FIG. 11 is a schematic cross-sectional view of the rim base of the conventional wheel rim and the tire which are assembled; and
FIG. 12 is a schematic cross-sectional view of the rim base of the wheel rim with the rim flanges and the tire which are assembled.

### Reference numerals:

1 refers to conventional wheel rim, 2 refers to inner rim flange, 3 refers to bead seat; 4 refers to rim base groove; and 5 refers to outer rim flange;
10 refers to wheel rim with flexible rim flanges, 11 refers to bead seat, 12 refers to rim base with half-height rim flange, 13 refers to rim base groove, 14 refers to outer half-height rim flange, 15 refers to groove structure of outer half-height rim flange, 16 refers to inner half-height rim flange, 17 refers to half-height rim flange, and 18 refers to convex structure of half-height rim flange;
20 refers to flexible rim flange at outer side; 21 refers to convex structure of flexible rim flange at outer side, 22 refers to annular framework, 23 refers to flexible rim flange at inner side, 24 refers to flexible rim flange, 25 refers to groove structure of flexible rim flange, and 26 refers to vertical edge structure of flexible rim flange;
30 refers to vehicle; and 31 refers to wheel;
40 refers to 100 mm high bump; and
50 refers to pneumatic tire.

### DETAILED DESCRIPTION OF PREFERRED EMBODIMENTS

After wheels are mounted on a vehicle: an outer rim flange refers to a rim flange that is easy to be seen with eyes around the vehicle and located at an outer side the vehicle, and an inner rim flange refers to a rim flange that cannot or is not easy to be seen with eyes around the vehicle and located at an inner side the vehicle; and tires used in the examples all have the same manufacturer, specification, parameters and batch.

A rim base of a wheel rim in the examples conforms to a GB/T 3487 dimension standard, maximum diameters of inner and outer rim flanges are the same (diameters of the inner and outer rim flanges are in an allowable tolerance range of the GB/T 3487), and a wheel rim is: 17X7.5J; and a tire is 225/45 R17, with a tire pressure of 2.3 bar. A test vehicle has a weight of 1.85 tons.

The technical solution of the present invention is further described hereinafter with reference to the embodiments and the drawings.

### Embodiment

According to a wheel in Solution 1, with reference to FIG. 1 and FIG. 11, a conventional wheel rim (1) is integrally made of an aluminum alloy material; a bead of a pneumatic tire (50) is mount on a bead seat (3) of the conventional wheel rim 1; a rim base groove (4) is far from an inner rim flange (2) and close to an outer rim flange (5); and a tire is arranged over the outer rim flange (5) to disassemble and assemble the tire.

According to a wheel in Solution 2, with reference to FIG. 2 to FIG. 5 and FIG. 12, an inner rim flange is provided without a flexible rim flange structure; a rim base with half-height rim flange (12) and a wheel rim with flexible rim flanges (10) are integrally made of an aluminum alloy material, a bead of a pneumatic tire (50) is mounted on a bead seat (11) of the wheel rim (10) with the flexible rim flanges and, and a rim base groove (13) is closer to an outer half-height rim flange (14); a flexible rim flange at an outer side (20) is made of a rubber material, a hardness of the rubber material of the flexible rim flange at the outer side (20) is less than 20% of a hardness of the aluminum alloy material of the rim base with the half-height rim flange(12), and the hardness is 75 (Shore A hardness), so that the material is soft and easy to be deformed; an annular framework (22) for preventing stretching deformation is arranged in the flexible rim flange at the outer side (20), the annular framework (22) is a circular ring made of a steel wire, and a tensile resistance (that is, a tensile strength) of the annular framework (22) is more than 5 times of a tensile resistanceof the rubber material of the flexible rim flange at the outer side (20), so that elastic rubber of the flexible rim flange at the outer side (20) is extruded onto the outer half-height rim flange. A convex structure of the flexible rim flange at the outer side is mounted in a groove structure of the outer half-height rim flange (15), which can prevent the flexible rim flange at the outer side (20) from falling off under a stress when the tire is arranged over the flexible rim flange at the outer side (20) to disassemble and assemble the tire; and at the same time, it is ensured that the flexible rim flange at the outer side (20) will not fall off during rotation of the wheel. Excluding a height of the convex structure of the flexible rim flange at the outer side and a vertical edge structure of the flexible rim flange, a height of the flexible rim flange at the outer side (20) in a diameter direction is 7 mm, and the flexible rim flange at the outer side is located at a circular arc part of a rim flange radius R2 (the R2 is 9.5 mm in the examples) in the GB/T 3487. After the tire is mounted on a wheel rim, when the wheel bears no load, in terms of a stress on the rim flange, a contact surface between the half-height rim flange and the tire mainly bears more than 75% of a tire pressure, and the remaining pressure is transferred to the half-height rim flange through the flexible rim flange. According to the wheel in Solution 2, maximum diameters of the inner and outer rim flanges of the wheel rim with the flexible rim flanges are the same or in a tolerance range, which is obviously different from a rim flange decorative strip mounted on the outer rim flange of the wheel rim in the market, this rim flange decorative strip is mounted on the outer rim flange, and a maximum diameter of the rim flange decorative strip is greater than a maximum diameter of the inner rim flange of the wheel rim.

A wheel in Solution 3 is different from the wheel in Solution 2 in that a flexible rim flange at an inner side (23) is added, and the flexible rim flange at the inner side (23) has the same outline dimension and material as the flexible rim flange at the outer side (20), and is also firmly fixed on an inner half-height rim flange (16), as shown in FIG. 6.

In Solution 2 and Solution 3, the half-height rim flange of the wheel rim is formed by machining the same wheel rim in Solution 1.

The convex structure of the flexible rim flange in Solution 1, Solution 2 and Solution 3 may be changed into the groove structure of the flexible rim flange (25), referring to the groove structure of the flexible rim flange (25) on the flexible rim flange (24) in FIG. 8; and the groove structure of the half-height rim flange in Solution 1, Solution 2 and Solution 3 may be changed into the convex structure, referring to the convex structure of the half-height rim flange (18) on the half-height rim flange (17) in FIG. 7.

Alternatively, all or a part of the flexible rim flange in Solution 1, Solution 2 and Solution 3 may be provided with the vertical edge structure of the flexible rim flange (26), referring to FIG. 9, in a diameter direction; the height of the flexible rim flange (20) is 7 mm (excluding a dimension of the vertical edge structure), and the height of the vertical edge structure of the flexible rim flange (26) is 4 mm; and when the tire is mounted on the wheel rim and inflated at 2.3 bar, the vertical edge structure of the rim flange (26) is firmly fixed on the wheel by extrusion of the tire.

The flexible material in Solution 1, Solution 2 and Solution 3 may be a thermoplastic polyurethane elastomer, wherein the thermoplastic polyurethane elastomer may be molded by injection, with high efficiency; and may also be a thermosetting polyurethane elastomer.

### Embodiment 1

As shown in FIG. 10, a wheel (31) of a vehicle (30) impacts a 100 mm high bump (40) at a certain speed (a fillet radius set for each tire collision is 4 mm, and the larger the fillet radius, the less likely the tire will be bulged), the 100 mm high bump (40) forms an angle of 45° with the driving vehicle, and an outer rim flange is impacted first, so that the outer rim flange mainly bears the impact force.

### Test process (under the same test environment):

### Wheel in Solution 1

When a 1^{st} tire is tested, the vehicle impacts the 100 mm high bump (50) at 25 km/hour for 4 times in total, and there is no damage or air leakage in a tire sidewall; and the vehicle continues to impact the 100 mm high bump (50) at 30 km/hour, a tire apex is cracked to leak air after a 1^{st} impact, with a crack opening oriented to a rim flange of a wheel rim, and the test is terminated.

When a 2^{nd} tire is tested, the vehicle impacts the 100 mm high bump (50) at 25 km/hour for 4 times in total, and there is no damage or air leakage in a tire sidewall; and the vehicle continues to impact the 100 mm high bump (50) at 30 km/hour, the tire sidewall is bulged after a 1^{st} impact, and the test is terminated.

When a 3^{rd} tire is tested, the vehicle impacts the 100 mm high bump (50) at 25 km/hour for 4 times in total, and there is no damage or air leakage in a tire sidewall; and the vehicle continues to impact the 100 mm high bump (50) at 30 km/hour, the test is passed in a 1^{st} impact, the tire is blown out in a 2^{nd} impact, and the test is terminated.

When a 4^{th} tire is tested, the vehicle impacts the 100 mm high bump (50) at 45 km/hour, the tire is blown out in a 1^{st} impact, and aluminum alloy of an outer rim flange (5) is damaged and deformed.

### Wheel in Solution 2

When a 1^{st} tire is tested, the vehicle impacts the 100 mm high bump (50) at 25, 30 and 35 km/hour for 4 times respectively, there is no damage or air leakage in a tire sidewall, and a flexible rim flange (20) at an outer side and an outer half-height rim flange (14) are not damaged.

When a 2^{nd} tire is tested, the vehicle impacts the 100 mm high bump (50) at 45 km/hour for 4 times in total, and aluminum alloy of the outer half-height rim flange (14) is not deformed.

Test results of a wheel in Solution 3 are the same as the test results of the wheel in Solution 2.

Similarly, in a square pit impact test (an impact resistance test in which there is a pit in a road surface and a wheel falls into the square pit, with the same or similar impact force on inner and outer rim flanges), Solution 3 can better prevent an inner side of the tire from being bulged, cracked and blown out compared with Solution 1 and Solution 2, and can protect an inner half-height rim flange (16) of a wheel rim from being damaged at the same time.

### Embodiment 2

In a fatigue impact test on an inner rim flange, the inner rim flange is cracked first in Solution 1 and Solution 2; and at this time, a flexible rim flange (23) arranged in Solution 3 plays a buffering role, so that there is no crack.

The order of the above embodiments is only for convenience of description and does not represent the superior and inferior levels of the embodiments.

Finally, it shall be noted that: the above embodiments are only used to illustrate the technical solutions of the present invention, and are not intended to limit the present invention. Although the present invention is described in detail with reference to the above embodiments, those of ordinary skills in the art shall understand that: the technical solutions recorded in the above embodiments can still be modified, or some of the technical features are equivalently substituted. However, these modifications or substitutions do not make the essences of the corresponding technical solutions deviate from the spirits and scopes of the technical solutions of the embodiments of the present invention.

## Claims

1. A wheel rim with a flexible rim flange, wherein the rim flange of the wheel rim with the flexible rim flange comprises at least two parts: a flexible rim flange located at an outermost circumference of the rim flanges, and a half-height rim flange located at an inner side of the flexible rim flange;
the flexible rim flange comprises at least one material, and a hardness of the flexible rim flange is smaller than a hardness of the half-height rim flange;
the half-height rim flange and a rim base are integrally formed, and in a radial direction, a minimum distance from a circle with a maximum diameter of the half-height rim flange to a circle with a calibration diameter D of the rim base is less than or equal to (a height G of the rim flange -2.5) mm, and the calibration diameter D of the rim base and the height G of the rim flange refer to definitions and numerical standards in GB/T 3487; and
a pneumatic tire can be mounted on a bead seat of the rim base with a half-height rim flange, wherein the rim base integrally formed with the half-height rim flange is the rim base with the half-height rim flange.

2. The wheel rim with the flexible rim flange according to claim 1, wherein maximum diameters of inner and outer rim flanges of the wheel rim with the flexible rim flange are the same or in a tolerance range, and a dimension of the rim base of the wheel rim with the flexible rim flange meets the GB/T 3487 dimension standard.

3. The wheel rim with the flexible rim flange according to claim 1, wherein a hardness of the at least one material of the flexible rim flange is less than 30% of a hardness of a material of the half-height rim flange.

4. The wheel rim with the flexible rim flange according to claim 1, wherein the half-height rim flange is provided with a groove structure, the flexible rim flange is provided with a convex structure, and the convex structure is mounted in the groove structure;
or, the half-height rim flange is provided with a convex structure, the flexible rim flange is provided with a groove structure, and the convex structure is mounted in the groove structure.

5. The wheel rim with the flexible rim flange according to claim 1, wherein the flexible rim flange is provided with a vertical edge structure, and the vertical edge structure of the flexible rim flange can be located between the tire and the corresponding half-height rim flange.

6. The wheel rim with the flexible rim flange according to claim 1, wherein the tire can be mounted on the wheel rim and inflated at an air pressure of 2.3 bar, in the case that a wheel has no load, an outer diameter of the half-height rim flange is not less than an outer diameter of a bead steel wire, and in terms of a stress on the rim flange, a contact surface between the half-height rim flange and the tire mainly bears a tire pressure.

7. The wheel rim with the flexible rim flange according to claim 1, wherein the flexible rim flange contains at least an elastic material.

8. The wheel rim with the flexible rim flange according to claim 5, wherein a friction coefficient between the flexible rim flange or the vertical edge structure of the flexible rim flange and tire rubber is more than twice of a friction coefficient between the half-height rim flange and tire rubber.

9. The wheel rim with the flexible rim flange according to claim 7, wherein the elastic material is an elastomer, and the elastomer is a thermoplastic elastomer or a thermosetting elastomer.

10. The wheel rim with the flexible rim flange according to claim 7, wherein the flexible rim flange comprises an elastomer and an annular framework for preventing stretching, and a tensile resistance of the annular framework is more than twice of a tensile resistance of the elastomer.
